# EUROPÄISCHE PATENTSCHRIFT

(11) **EP 0 977 943 B1**
(45) Veröffentlichungstag und Bekanntmachung des Hinweises auf die Patenterteilung: **06.08.2003**
(21) Anmeldenummer: 98963382.1
(22) Anmeldetag: 26.11.1998
(51) Int. Cl.: F02M 57/02, F02M 59/44, F02M 61/16, B23K 26/18, B23K 26/00, B23K 15/08

(54) **KRAFTSTOFFEINSPRITZEINRICHTUNG FÜR BRENNKRAFTMASCHINEN**
FUEL INJECTION DEVICE FOR INTERNAL COMBUSTION ENGINES
SYSTEME D'INJECTION DE CARBURANT POUR MOTEURS A COMBUSTION INTERNE

(30) Priorität: 28.11.1997 DE 19752834
(43) Veröffentlichungstag der Anmeldung: 09.02.2000
(73) Patentinhaber: ROBERT BOSCH GMBH, 70442 Stuttgart (DE)
(72) Erfinder: BRENDLE, Peter, D-72829 Engstingen (DE); SCHNEIDER, Rainer, D-71739 Oberriexingen (DE); EISEMANN, Achim, D-74196 Neuenstadt (DE); KRONBERGER, Maximilian, A-4400 Steyr (AT); STRAHBERGER, Herbert, A-4210 Gallneukirchen (AT); FEICHTINGER, Ernst, A-4060 Leonding (AT)
(86) Internationale Anmeldenummer: DE9803474
(87) Internationale Veröffentlichungsnummer: WO99028618

(56) Entgegenhaltungen:
- US-A- 4 156 807
- US-A- 4 168 689
- US-A- 4 239 954
- US-A- 4 288 330
- US-A- 4 618 095

## Beschreibung

### Stand der Technik

Die Erfindung geht von einer Kraftstoffeinspritzeinrichtung für Brennkraftmaschinen nach der Gattung des Patentanspruchs 1 aus. Bei einer derartigen aus der EP 0 461 212 bekannten Kraftstoffeinspritzeinrichtung der Pumpe-Düsenbauart ist eine Kraftstoffeinspritzpumpe mittels einer Spannhülse axial mit einem Kraftstoffeinspritzventil zu einer Baueinheit zusammengefaßt und mit dieser gemeinsam in das Gehäuse der Brennkraftmaschine eingesetzt. Die Kraftstoffeinspritzpumpe weist dabei einen kolbenförmigen Pumpenkolben auf, der durch die Nockenwelle der Brennkraftmaschine angetrieben wird. Die dabei im Pumpenarbeitsraum der Kraftstoffeinspritzpumpe geförderte Kraftstoffhochdruckmenge wird während des Druckhubes des Pumpenkolbens durch ein elektrisches Steuerventil gesteuert, welches ebenfalls in die Baueinheit von Einspritzpumpe und Einspritzventil eingesetzt ist und sich dort an einem seitlich vorkragenden Gehäuseteil befindet. Dabei wird aus einem Kraftstoffvorratsbehälter über eine Kraftstoffförderpumpe Kraftstoff über eine Kraftstoffzuführungsleitung zur Kraftstoffeinspritzpumpe gefördert, die in einen die Spannhülse umgebenden Ringraum mündet. Dieser Ringraum im Gehäuse der Brennkraftmaschine ist über Durchtrittsöffnungen in der Spannhülse und weiter über Zulaufkanäle im Pumpengehäuse mit dem Arbeitsraum der Kraftstoffeinspritzpumpe verbindbar, wobei diese Verbindung durch das elektrische Steuerventil verschließbar ist. Der von der Kraftstoffeinspritzpumpe unter Hochdruck geförderte Kraftstoff gelangt dabei über Einspritzleitungen an das Kraftstoffeinspritzventil und wird dort nach Überschreiten eines bestimmten Öffnungsdruckes über Einspritzöffnungen in den Brennraum der Brennkraftmaschine eingespritzt.

Um dabei die Einspritzöffnung am Kraftstoffeinspritzventil vor einem Verstopfen zu schützen und daraus resultierende Mengenstreuungen und ungenaue Einspritzstrahlcharakteristiken zu vermeiden weisen Kraftstoffeinspritzeinrichtungen der Pumpe-Düsenbauart in der Kraftstoffzuführungsleitung zur Kraftstoffeinspritzpumpe Kraftstofffilter auf, die durch eingesetzte Ring- oder Knopffilter in gewebter Maschengitterausführung gebildet sind. Des weiteren sind Spaltfilter innerhalb des Kraftstoffeinspritzventils bekannt. Diese bekannten Kraftstofffilter weisen jedoch den Nachteil auf, daß sie zusätzlichen Bauraum benötigen und zudem einen zusätzlichen Fertigungs- und Montageaufwand verursachen. Zudem treten bei diesen bekannten Kraftstofffiltern Probleme hinsichtlich ihrer Dauerhaltbarkeit auf, da die effektive Filterfläche relativ gering ist und sich somit schnell zusetzen kann.

### Vorteile der Erfindung

Die erfindungsgemäße Kraftstoffeinspritzeinrichtung für Brennkraftmaschinen mit den kennzeichnenden Merkmalen des Patentanspruchs 1 hat demgegenüber den Vorteil, daß die Filterfunktion durch ein vorhandenes Bauteil mitübernommen werden kann, so daß keine zusätzlichen Bauteile zum Kraftstofffiltern an der erfindungsgemäßen Kraftstoffeinspritzeinrichtung notwendig sind. Dazu sind in der die Kraftstoffeinspritzpumpe und das Kraftstoffeinspritzventil axial gegeneinander verspannenden Spannhülse im Bereich eines kraftstoffgefüllten Ringraumes eine Vielzahl von Filteröffnungen vorgesehen, die beim Kraftstoffdurchtritt als Schmutzpartikelfilter wirken. Dabei sind diese Filteröffnungen in vorteilhafter Weise um den gesamten Umfang der Spannhülse angeordnet, so daß sich ein großer effektiver Filterquerschnitt ergibt. Die Filterlöcher selbst weisen vorzugsweise einen Durchmesser von 30 bis 90µm auf, so daß auch kleinere Schmutzpartikel sicher aus dem Kraftstoff herausgefiltert werden können. Ein weiterer Vorteil der Filterfunktion durch eine perforierte Spannhülse ist die Möglichkeit, durch die Anordnung und Auslegung der Filteröffnungen spezifische Durchflußwerte einzustellen, ohne dabei zusätzliche Änderungen an anderen Bauteilen vornehmen zu müssen. Somit lassen sich in einfacher Weise Druckregelfunktionen realisieren, durch die Schaltzeiten der gesamten Kraftstoffeinspritzeinrichtung optimiert und zusätzliche Drosselbohrungen entfallen können. Dabei ist es besonders vorteilhaft, die Filterlöcher in der Spannhülse konisch mit radial einwärts gerichteter Querschnittsverringerung auszubilden, so daß eine Strömungsumkehr des durchströmenden Kraftstoffes die Filteröffnungen auf einfache Weise freispülen kann. Ein weiterer Vorteil der Verwendung der Spannhülse als Kraftstofffilter ist die Vermeidung von möglichen Montagefehlern durch falsch eingesetzte oder lose Kraftstofffilter, die im Betrieb der Kraftstoffeinspritzeinrichtung Störungen verursachen könnten. Zudem weist das durch die Spannhülse gebildete Kraftstofffilter eine hohe Dauerbeständigkeit und große Robustheit auf.

Die Filteröffnungen der erfindungsgemäßen Filterhülse sind dabei in vorteilhafter Weise mittels eines pulsierenden Elektronen- oder Laserstrahles hergestellt. Dabei erzeugt jeweils ein Strahlimpuls eine Filteröffnung in der Hülsenwand, wobei die Hülse während der Bearbeitung um ihre Achse rotiert und das Strahlwerkzeug linear verschoben wird, so daß sich eine schraubenförmige Reihe von Filteröffnungen am Umfang der Filterhülse ergibt. Um dabei eine Gratbildung an der Innenwand der Bohrungen zu vermeiden wird ein elastischer Werkstoff (z.B. Silikon) auf der strahlabgewandten Wandseite des Filterkörpers hinterlegt, der beim Strahlauftreffen während der Verarbeitungsphase verdampft und durch diesen Dampfdruck den Materialabtrag aus der Filteröffnung auswirft. Um zudem eine Gratbildung an der Außenwand der Bohrung zu minimieren, wird die strahlzugewandte äußere Oberfläche der Filterhülse mit einem Material beschichtet, das ein Festsetzen von Bearbeitungsspänen vermeidet. Diese vorzugsweise mit Manganphosphat beschichtete Oberfläche verhindert dabei ein Haftenbleiben des ausgeblasenen Materialabtrags.

Durch die Dauer und Auslegung des Strahlimpulses während des Einbringens der Filteröffnungen lassen sich dabei verschiedene Querschnitte und durch die Rotationsgeschwindigkeit des Filterteils verschiedene Anordnungen realisieren, wobei unter anderem auch Schlitze und ähnliche Querschnittsformen für die Filteröffnungen möglich sind.

Weitere Vorteile und vorteilhafte Ausgestaltungen des Gegenstandes der Erfindung sind der Beschreibung, der Zeichnung und den Patentansprüchen entnehmbar.

### Zeichnung

Ein Ausführungsbeispiel der erfindungsgemäßen Kraftstoffeinspritzeinrichtung für Brennkraftmaschinen ist in der Zeichnung dargestellt und wird in der folgenden Beschreibung näher erläutert. Es zeigen die Figur 1 einen Längsschnitt durch die Kraftstoffeinspritzeinrichtung im Gehäuse der Brennkraftmaschine, die Figur 2 eine vergrößerte Einzeldarstellung der als Kraftstofffilter ausgebildeten Spannhülse, die Figur 3 einen vergrößerten Ausschnitt aus der Spannhülse im Bereich der Filteröffnungen und die Figur 4 eine schematische Darstellung des Herstellungsverfahrens der Filteröffnungen der Spannhülse.

### Beschreibung des Ausführungsbeispiels

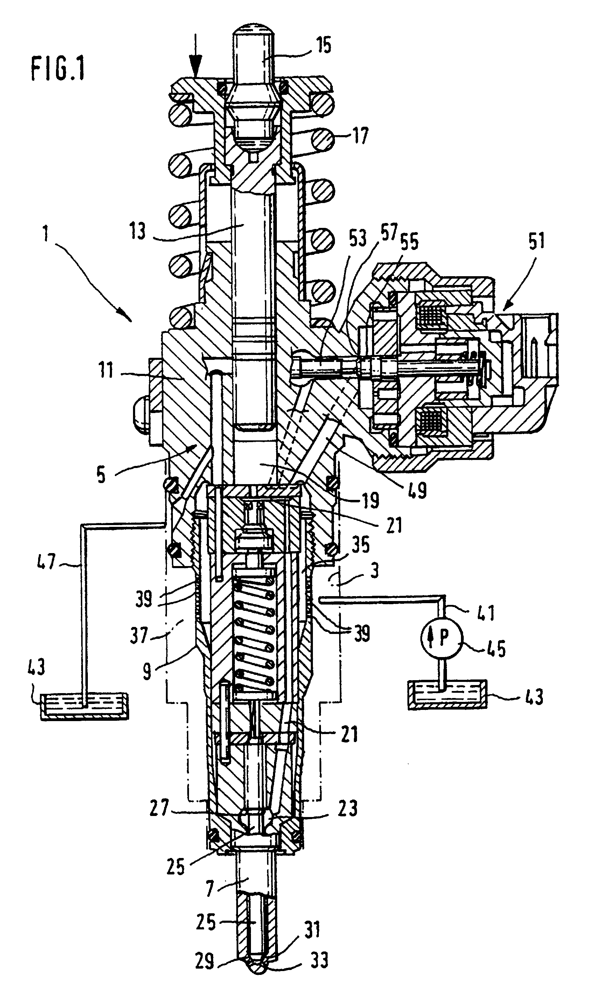

Die in der Figur 1 dargestellte Kraftstoffeinspritzeinrichtung für Brennkraftmaschinen ist eine sog. Pumpe-Düse 1, die in eine entsprechende Aufnahmeöffnung 3 eines nicht näher dargestellten Gehäuses der Brennkraftmaschine eingesetzt ist. Die Kraftstoffeinspritzeinrichtung ist dabei aus einer Kraftstoffeinspritzpumpe 5 und einem Kraftstoffeinspritzventil 7 gebildet, wobei Kraftstoffeinspritzpumpe 5 und Kraftstoffeinspritzventil 7 mittels einer Spannhülse 9 axial gegeneinander verspannt sind. Die Kraftstoffeinspritzpumpe 5 weist dabei einen in einem Pumpengehäuse 11 axial geführten Pumpenkolben 13 auf, der über einen Stößel 15 von einem nicht dargestellten Antriebselement entgegen der Kraft einer Rückstellfeder 17 axial hin- und hergehend angetrieben wird. Der Pumpenkolben 13 begrenzt mit seiner Stirnfläche einen Pumpenarbeitsraum 19 im Pumpengehäuse 11, von dem eine Druckleitung 21 zu einem Druckraum 23 innerhalb des Kraftstoffeinspritzventils 7 abführt. In diesen Druckraum 23 ragt ein axial verschiebbares kolbenförmiges Ventilglied 25 des Kraftstoffeinspritzventils 7, das im Bereich des Druckraumes 23 eine Ringschulter 27 aufweist, an der der im Druckraum 23 anstehende Kraftstoffhochdruck in Öffnungsrichtung des Ventilgliedes 25 angreift. Das Ventilglied 25 weist an seinem unteren, pumpenabgewandten Ende eine konische ventildichtfläche 29 auf, mit der es in bekannter Weise mit einer konischen Sitzfläche 31 am nach innen kragenden Ende der Ventilgliedbohrung zusammenwirkt, von der wenigstens eine Einspritzöffnung 33 in den Brennraum der zu versorgenden Brennkraftmaschine abführt.

Die Kraftstoffeinspritzeinrichtung weist einen Niederdruckraum 35 auf, der als innenliegender Ringraum ausgebildet ist und zwischen der äußeren Umfangswand des Kraftstoffeinspritzventils 7 und der Innenwand der Spannhülse 9 gebildet ist. Dieser innenliegende Niederdruckraum 35 ist über Durchtrittsöffnungen in der Wand der Spannhülse 9 mit einem außenliegenden Ringraum 37 verbunden, wobei die Durchtrittsöffnungen in der Wand der Spannhülse 9 als Filteröffnungen 39 ausgebildet sind. Der äußere Ringraum 37 wird dabei durch die äußere Umfangsfläche der Spannhülse 9 und eine Wand im Gehäuse der nicht näher dargestellten Brennkraftmaschine begrenzt. In diesen äußeren kraftstoffgefüllten Ringraum 37 mündet dabei eine Kraftstoffzuführungsleitung 41, über die Kraftstoff aus einem Kraftstoffvorratstank 43 mittels einer Vorförderpumpe 45 in den Ringraum 37 gefördert wird. Des weiteren führt vom äußeren Ringraum 37 eine Rücklaufleitung 47 in den Vorratstank 43 ab.

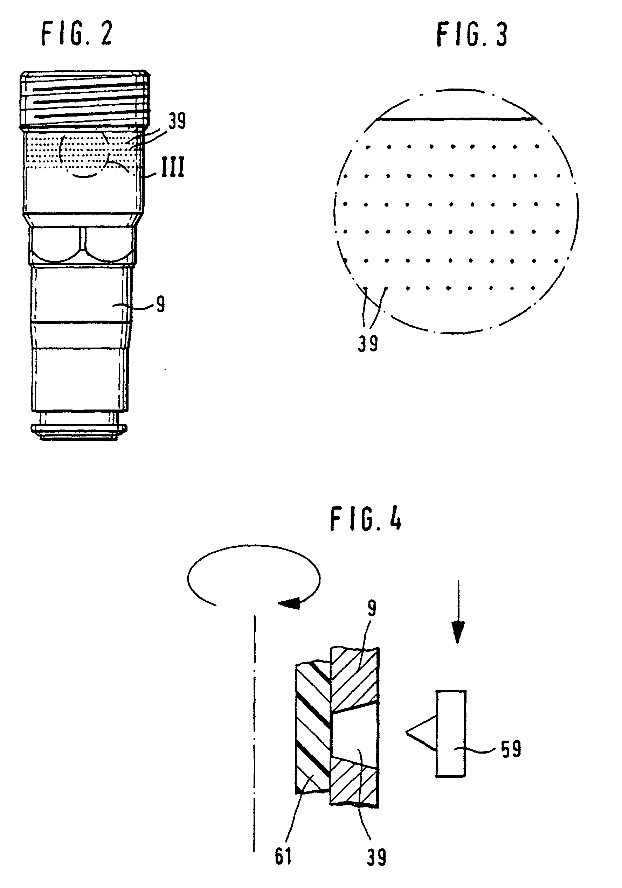

Im Gehäuse der Kraftstoffeinspritzpumpe 5 ist weiterhin ein Zulaufkanal 49 vorgesehen, der vom innenliegenden Niederdruckraum 35 ausgehend in den Pumpenarbeitsraum 19 mündet. Dabei ist in diesen Zulaufkanal 49 zur Steuerung der Hochdruckförderung der Kraftstoffeinspritzpumpe 5 ein elektrisch steuerbares Mengensteuerventil 51 eingesetzt, das als Magnetventil ausgebildet und in einen seitlich vorstehenden Teil des Pumpengehäuses eingesetzt ist. Dieses Steuerventil 51 verschließt dabei mittels eines Steuerkolbens 53 den Durchfluß durch den Zulaufkanal 49, wozu der Steuerkolben 53 eine Ventildichtfläche 55 aufweist, mit der er mit einer ortsfesten Ventilsitzfläche 57 zusammenwirkt. Um an der erfindungsgemäßen Kraftstoffeinspritzeinrichtung eine effektive und wirksame Kraftstoff-Filterung vornehmen zu können bilden die Filteröffnungen 39 in der Spannhülse 9 wie in den Figuren 2 und 3 vergrößert dargestellt einen Kraftstofffilter zwischen dem äußeren Ringraum 37 und dem innenliegenden Niederdruckringraum 35. Diese Filteröffnungen der perforierten Spannhülse 9 weisen dabei vorzugsweise einen Durchmesser von 30 bis 90µm auf und sind in mehreren Reihen gleichmäßig über den Umfang der Spannhülse 9 verteilt angeordnet. Des weiteren weisen die Filteröffnungen 39 eine in der Figur 4 gezeigte konische Querschnittsform auf, wobei sich der Durchmesser der Filterlöcher 39 radial einwärts verringert. Diese konische Ausbildung der Filteröffnungen 39 bewirkt dabei beim Zusetzen der Öffnungen eine Strömungsumkehr des durchströmenden Kraftstoffes, so daß durch diesen Impuls die Filteröffnungen auf einfache Weise freigespült werden können.

Die Herstellung der Filteröffnungen 39 in de Spannhülse 9 erfolgt erfindungsgemäß mittels eines Elektronen- oder Laserstrahls, wobei die Spannhülse 9 während des Einbringens der Filteröffnungen 39 um ihre Achse gedreht wird. Dabei wird der Laserstrahl durch eine Strahlungsquelle 59 pulsierend auf die Oberfläche der Spannhülse 9 aufgebracht, wobei jeder Strahlimpuls einer Filteröffnung 39 entspricht. Die Form und Ausbildung der Filteröffnungen 39 läßt sich dabei durch definierte Pulsdauern entsprechend einstellen. Um eine ununterbrochene Bearbeitung der spannhülse 9 zu erreichen, wird zudem die Strahlungsquelle 59 des Laserstrahls linear verschoben, so daß sich während der Bearbeitung eine schraubenlinienförmige Reihe von Filteröffnungen 39 an der Umfangswand der Spannhülse 9 ergibt.

Um eine Gratbildung an der Innenwand der Spannhülse 9 zu vermeiden wird weiterhin ein Unterlegmaterial 61 aus einem elastischen Werkstoff, z.B. Silikon an der Innenwand der Spannhülse 9 angeordnet. Dieses Unterlegmaterial 61 verdampft beim Auftreffen des Perforationsstrahles und treibt so das abgetragene Material durch den entstehenden Dampfdruck aus der Filteröffnungsbohrung 39. Um zudem eine Gratbildung an der Außenwand der Spannhülse 9 zu unterbinden, wird die strahlzugewandte Außenoberfläche der Spannhülse 9 mit einem Material beschichtet, das ein Festsetzen von Bearbeitungsspänen vermeidet. Diese Außenbeschichtung ist dabei vorzugsweise durch Manganphosphat gebildet.

Die erfindungsgemäße Kraftstoffeinspritzeinrichtung für Brennkraftmaschinen arbeitet in folgender Weise. Mit Beginn des Betriebs der Brennkraftmaschine wird der Pumpenkolben 13 über einen Nockenantrieb und den Stößel 15 entgegen der Rückstellkraft der Feder 17 axial hin- und hergehend angetrieben. Zugleich wird der Niederdruckraum 35 von der Kraftstoffvorförderpumpe 45 mit Kraftstoff aus dem Vorratstank 43 über die Zuführungsleitung 41 und den äußeren Ringraum 37 mit Kraftstoff niederen Druckes befüllt, wobei dieser Kraftstoff beim Durchtritt durch die Filteröffnungen 39 in der Spannhülse 9 feingefiltert wird. Der Kraftstoff gelangt aus dem Niederdruckraum 35 weiter über den geöffneten Zulaufkanal 49 in den Pumpenarbeitsraum 19 der Kraftstoffeinspritzpumpe 5. Während der nach außen gerichteten Förderhubbewegung des Pumpenkolbens 13 wird dabei der Pumpenarbeitsraum 19 mit Kraftstoff befüllt. Im anschließenden nach unten gerichteten Förderhub verdrängt der Pumpenkolben 13 zunächst einen Teil des im Pumpenarbeitsraum 19 befindlichen Kraftstoffes über die noch geöffnete Zulaufleitung 49 zurück in den Niederdruckraum 35. Soll die Hochdruckförderung beginnen, wird das elektrische Steuerventil 51 bestromt und verschließt den Zulaufkanal 49. Dadurch wird im nunmehr gegenüber dem Niederdruckraum 35 verschlossenen Pumpenarbeitsraum 19 während der weiteren Förderhubbewegung des Pumpenkolbens 13 ein Kraftstoffhochdruck aufgebaut, der sich über die Druckleitung 21 bis an den Ventilsitz 31 des Kraftstoffeinspritzventils 7 fortsetzt. Dort bewirkt der Kraftstoffhochdruck im Druckraum 23 in bekannter Weise nach dem Überschreiten des Öffnungsdruckwertes ein Abheben des Ventilgliedes 25 vom Ventilsitz 31, so daß der unter hohem Druck stehende Kraftstoff über die Einspritzöffnungen 33 in den Brennraum der Brennkraftmaschine eingespritzt werden kann.

Die Kraftstoffhochdruckeinspritzung wird beendet, indem das elektrische Steuerventil 51 erneut stromlos geschaltet wird, so daß der Steuerkolben 53 vom Ventilsitz 57 abhebt und den Zulaufkanal 49 zwischen dem Pumpenarbeitsraum 19 und dem Niederdruckraum 35 erneut aufsteuert, so daß sich der Hochdruck rasch in den Niederdruckraum 35 entspannt, wobei dieses Absinken unter den Einspritzöffnungsdruck ein rasches Schließen des Kraftstoffeinspritzventils zur Folge hat.

Dabei wird die Kraftstofffeinfilterung an der beschriebenen Kraftstoffeinspritzeinrichtung in konstruktiv einfacher weise durch Filteröffnungen 39 an der Spannhülse 9 vorgenommen, so daß auf zusätzliche Kraftstoff-Filter verzichtet werden kann. Die Filterhülse ist dabei beim beschriebenen Ausführungsbeispiel der erfindungsgemäßen Kraftstoffeinspritzeinrichtung in eine sog. Pumpe-Düse-Einheit eingesetzt, alternativ können derartige Ringfilter jedoch auch in sämtliche andere Kraftstoffeinspritzsysteme eingesetzt werden.

## Patentansprüche

1. Kraftstoffeinspritzeinrichtung für Brennkraftmaschinen mit einer in ein Gehäuse der Brennkraftmaschine einsetzbaren Kraftstoffeinspritzpumpe (5), die mittels einer Spannhülse (9) axial mit einem Kraftstoffeinspritzventil (7) verspannt ist, das mit seinem pumpenfernen Ende in einen Brennraum der Brennkraftmaschine ragt und mit einer Kraftstoffzuführungsleitung (41) zur Kraftstoffeinspritzpumpe (5), die in einen die Spannhülse (9) umgebenden Ringraum (37) mündet, der über Durchtrittsöffnungen (39) in der Spannhülse (9) und Zulaufkanäle (49) im Pumpengehäuse mit einem Pumpenarbeitsraum (19) der Kraftstoffeinspritzpumpe (5) verbindbar ist, **dadurch gekennzeichnet, dass** im Kraftstoffzulauf der Kraftstoffeinspritzpumpe (5) ein Kraftstoffilter vorgesehen ist, das durch die Spannhülse (9) gebildet ist, die im Bereich des Ringraums (37) eine Vielzahl von Filteröffnungen (39) in ihrer Umfangswand aufweist, die die Durchtrittsöffnungen sind.

2. Kraftstoffeinspritzeinrichtung nach Anspruch 1, **dadurch gekennzeichnet, daß** die Filteröffnungen (39) als runde Filterbohrungen ausgebildet sind, die einen Durchmesser von 30 bis 90µm aufweisen.

3. Kraftstoffeinspritzeinrichtung nach Anspruch 1 und 2, **dadurch gekennzeichnet, daß** die Filteröffnungen (39) in Achsrichtung konisch ausgebildet sind, wobei sich der Querschnitt radial einwärts zur Spannhülse (9) verringert.

4. Kraftstoffeinspritzeinrichtung nach Anspruch 1, **dadurch gekennzeichnet, daß** mehrere Reihen von Filteröffnungen (39) in der Wand der Spannhülse (9) vorgesehen sind, wobei der Gesamtdurchströmquerschnitt durch die Ausbildung der Filteröffnungen (39) einstellbar ist.

5. Kraftstoffeinspritzeinrichtung nach Anspruch 1, **dadurch gekennzeichnet, daß** die Spannhülse (9) im Bereich des äußeren, von der Gehäusewand der Brennkraftmaschine begrenzten Ringraumes (37) einen inneren, einen Niederdruckraum (35) bildenden Ringraum innerhalb der Spannhülse (9) begrenzt, von dem die Zulaufkanäle (49) in den Pumpenarbeitsraum (19) der Kraftstoffeinspritzpumpe (5) abführen.

6. Kraftstoffeinspritzeinrichtung nach Anspruch 1, **dadurch gekennzeichnet, daß** ein elektrisches Steuerventil (51) in den Zulaufkanal (49) zum Pumpenarbeitsraum (19) eingesetzt ist, über das sich die Hochdruckförderung der Kraftstoffeinspritzpumpe (5) steuern läßt.

7. Verfahren zum Einbringen von Filteröffnungen (39) in Spannhülsen (9) von Kraftstoffeinspritzeinrichtungen gemäß Patentanspruch 1 mittels eines Elektronen- oder Laserstrahls, **dadurch gekennzeichnet, dass** ein elastischer Werkstoff auf der strahlabgewandten Wandseite der Spannhülse (9) hinterlegt wird, der beim Strahlauftreffen während der Bearbeitungsphase verdampft und dabei den Materialabtrag aus der bearbeiteten Filteröffnung (39) spült.

8. Verfahren nach Anspruch 7, **dadurch gekennzeichnet, daß** der elastische Werkstoff durch Silikon gebildet wird.

9. Verfahren nach Anspruch 7, **dadurch gekennzeichnet, daß** die Strahlbeaufschlagung des Elektronen- oder Laserstrahls pulsierend erfolgt, wobei pro zu erzeugender Öffnung ein Strahlimpuls vorgesehen ist, über dessen Dauer sich die Öffnungsform der Filteröffnung (39) einstellen läßt.

10. Verfahren nach Anspruch 9, **dadurch gekennzeichnet, daß** die Spannhülse (9) während ihrer Bearbeitung um ihre Achse rotiert und die Strahlungsquelle (59) linear verschoben wird, so daß sich eine Schraubenlinie von Filteröffnungen (39) über den Umfang der Spannhülse (9) ergibt.

11. Verfahren nach Anspruch 7, **dadurch gekennzeichnet, daß** die strahlzugewandte äußere Oberfläche der Spannhülse (9) mit einem Material beschichtet ist, das ein Festsetzen von Bearbeitungsspänen vermeidet.

12. Verfahren nach Anspruch 11, **dadurch gekennzeichnet, daß** die strahlzugewandte Oberfläche der Spannhülse (9) mit Manganphosphat beschichtet ist.

## Claims

1. Fuel injection device for internal combustion engines, with a fuel injection pump (5) which is capable of being inserted into a housing of the internal combustion engine and is braced axially, by means of a clamping sleeve (9), with a fuel injection valve (7) which projects with its end remote from the pump into a combustion space of the internal combustion engine, and with a fuel supply line (41) to the fuel injection pump (5), the said fuel supply line issuing into an annular space (37) which surrounds the clamping sleeve (9) and which is connectable to a pump working space (19) of the fuel injection pump (5) via passage orifices (39) in the clamping sleeve (9) and flow ducts (49) in the pump housing, **characterized in that** there is provided in the fuel inflow of the fuel injection pump (5) a fuel filter which is formed by the clamping sleeve (9) which, in the region of the annular space (37) has in its circumferential wall a multiplicity of filter orifices (39) which are the passage orifices.

2. Fuel injection device according to Claim 1, **characterized in that** the filter orifices (39) are designed as round filter bores which have a diameter of 30 to 90 µm.

3. Fuel injection device according to Claims 1 and 2, **characterized in that** the filter orifices (39) are designed conically in the axial direction, the cross section decreasing radially inwards in relation to the clamping sleeve (9).

4. Fuel injection device according to Claim 1, **characterized in that** a plurality of rows of filter orifices (39) are provided in the wall of the clamping sleeve (9), the total throughflow cross section being adjustable by virtue of the design of the filter orifices (39).

5. Fuel injection device according to Claim 1, **characterized in that**, in the region of the outer annular space (37) delimited by the housing wall of the internal combustion engine, the clamping sleeve (9) delimits, within said clamping sleeve (9), an inner annular space which forms a low-pressure space (35) and from which the inflow ducts (49) lead away into the pump working space (19) of the fuel injection pump (5).

6. Fuel injection device according to Claim 1, **characterized in that** an electrical control valve (51), via which the high-pressure conveyance of the fuel injection pump (5) can be controlled, is inserted into the inflow duct (49) to the pump working space (19).

7. Method for the introduction of filter orifices (39) in the clamping sleeves (9) of fuel injection devices according to Patent Claim 1 by means of an electron or laser beam, **characterized in that** an elastic material is laid as backing on that wall side of the clamping sleeve (9) which faces away from the beam and, when the beam impinges during the machining phase, evaporates and at the same time flushes the stripped-off material out of the machine filter orifice (39).

8. Method according to Claim 7, **characterized in that** the elastic material is formed by silicone.

9. Method according to Claim 7, **characterized in that** the beam action of the electron or laser beam takes place in a pulsating manner, and for each orifice to be produced a beam pulse is provided, via the duration of which the orifice form of the filter orifice (39) can be set.

10. Method according to Claim 9, **characterized in that** the clamping sleeve (9) rotates about its axis during its machining and the radiation source (59) is displaced linearly, so that a helical line of filter orifices (39) is obtained over the circumference of the clamping sleeve (9).

11. Method according to Claim 7, **characterized in that** the beam-facing outer surface of the clamping sleeve (9) is coated with a material which prevents settling of machining chips.

12. Method according to Claim 11, **characterized in that** the beam-facing surface of the clamping sleeve (9) is coated with manganese phosphate.

## Revendications

1. Installation d'injection de carburant pour des moteurs à combustion interne, avec une pompe d'injection de carburant (5) qu'on peut introduire dans un carter du moteur à combustion interne et qui est serrée à l'aide d'un manchon de serrage (9) axialement avec un injecteur de carburant (7) qui dépasse avec son extrémité éloignée de la pompe dans une chambre de combustion du moteur à combustion interne, et avec une conduite d'amenée de carburant (41) arrivant à la pompe d'injection de carburant (5) et débouchant dans un espace annulaire (37), qui entoure le manchon de serrage (9) et qui peut être relié à une chambre de travail de pompe (19) de la pompe d'injection de carburant (5) au moyen d'ouvertures de passage (39) dans le manchon de serrage (9) et de canaux d'amenée (49) dans le boîtier de pompe,
**caractérisée en ce que**
dans l'amenée de carburant de la pompe d'injection de carburant (5) on prévoit un filtre de carburant formé par le manchon de serrage (9) qui dans la zone de l'espace annulaire (37) présente dans sa paroi périphérique un grand nombre d'ouvertures de filtre (39) qui sont les ouvertures de passage.

2. Installation d'injection de carburant selon la revendication 1,
**caractérisée en ce que**
les ouvertures de filtre (39) sont formées en tant que perçages de filtre qui présentent un diamètre compris entre 30 et 90 µm.

3. Installation d'injection de carburant selon la revendication 1 ou 2,
**caractérisée en ce que**
les ouvertures de filtre (39) sont formées coniquement en direction de l'axe, la section transversale diminuant radialement vers le manchon de serrage (9).

4. Installation d'injection de carburant selon la revendication 1,
**caractérisée en ce que**
plusieurs rangées d'ouvertures de filtre (39) sont prévues dans la paroi du manchon de serrage (9), la section transversale d'écoulement totale pouvant être réglée par la conception des ouvertures de filtre (39).

5. Installation d'injection de carburant selon la revendication 1,
**caractérisée en ce que**
le manchon de serrage (9), dans la zone de l'espace annulaire (37) extérieur limité par la paroi de carter du moteur à combustion interne, limite à l'intérieur du manchon de serrage (9) un espace annulaire intérieur forment un espace de basse pression (35), à partir duquel les canaux d'amenée (49) partent dans la chambre de travail de pompe (19) de la pompe d'injection de carburant (5).

6. Installation d'injection de carburant selon la revendication 1,
**caractérisée en ce que**
dans le canal d'amenée (49) vers la chambre de travail de pompe (19) est insérée une soupape de commande (51) électrique grâce à laquelle on peut régler le débit de haute pression de la pompe d'injection de carburant (5).

7. Procédé pour introduire des ouvertures de filtre (39) dans des manchons de serrage (9) pour des installations d'injection de carburant selon la revendication 1 à l'aide d'un faisceau électronique ou laser,
**caractérisé en ce que**
sur le côté de paroi, opposé au faisceau, du manchon de serrage (9) est déposé un matériau élastique qui se volatilise lors de l'impact du faisceau pendant la phase de traitement et alors refoule de l'ouverture de filtre (39) traitée la substance détachée.

8. Procédé selon la revendication 7,
**caractérisé en ce que**
le matériau élastique est formé par de la silicone.

9. Procédé selon la revendication 7,
**caractérisé en ce que**
l'alimentation en faisceau du faisceau électronique ou laser est réalisée par impulsions, en prévoyant pour chaque ouverture à produire une impulsion de faisceau dont la durée permet de régler la forme de l'ouverture de filtre (39).

10. Procédé selon la revendication 9,
**caractérisé en ce que**
pendant son traitement le manchon de serrage (9) tourne autour de son axe et la source de faisceau (59) est déplacée linéairement de sorte que l'on obtient une hélice d'ouverture de filtre (39) sur le pourtour du manchon de serrage (9).

11. Procédé selon la revendication 7,
**caractérisé en ce que**
la surface extérieure, orientée vers le faisceau, du manchon de serrage (9) est recouverte d'un matériau qui évite la fixation de particules de traitement.

12. Procédé selon la revendication 11,
**caractérisé en ce que**
la surface, orientée vers le faisceau, du manchon de serrage (9) est recouverte de phosphate de manganèse.
